# FASCICULE DE BREVET EUROPEEN

(11) **EP 3 637 582 B1**
(45) Date de publication et mention de la délivrance du brevet: **02.06.2021**
(21) Numéro de dépôt: 19200816.7
(22) Date de dépôt: 01.10.2019
(51) Int. Cl.: H02J 15/00, B61D 43/00, B61H 9/06, B60M 3/06, B60T 1/10, C25B 1/04, F16D 61/00, H01M 8/04082, H01M 8/0656, H01M 16/00

(54) **INSTALLATION DE STOCKAGE DE L'ÉNERGIE ÉLECTRIQUE ISSUE DU FREINAGE D'UN OU PLUSIEURS VÉHICULES FERROVIAIRES ET SYSTÈME DE STOCKAGE ASSOCIÉ**
ANLAGE ZUR SPEICHERUNG DER AUS DEM ABBREMSEN EINES ODER MEHRERER SCHIENENFAHRZEUGE ENTSTANDENEN ELEKTRISCHEN ENERGIE UND ZUGEHÖRIGES SPEICHERSYSTEM
INSTALLATION FOR STORING THE ELECTRICAL ENERGY RESULTING FROM THE BRAKING OF ONE OR MORE RAILWAY VEHICLES AND ASSOCIATED STORAGE SYSTEM

(30) Priorité: 08.10.2018 FR 1859318
(43) Date de publication de la demande: 15.04.2020
(73) Titulaire: ALSTOM Transport Technologies, 93400 Saint-Ouen (FR)
(72) Inventeur: SOLOMALALA, Pierre, 65800 AUREILHAN (FR)
(74) Mandataire: Lavoix

(56) Documents cités:
- WO-A1-2014/200335
- WO-A1-2015/198214
- FR-A1- 2 959 065
- JP-A- 2001 157 385
- JP-A- 2010 106 798
- US-A1- 2011 144 831

## Description

La présente invention concerne une installation de stockage de l'énergie électrique issue du freinage d'un ou plusieurs véhicules ferroviaires circulant sur au moins une voie ferrée, l'installation étant destinée à être implantée à l'extérieur du ou des véhicules ferroviaires.

L'invention se rapporte également à un système de stockage de l'énergie électrique issue du freinage d'un ou plusieurs de véhicules ferroviaires comprenant une telle installation.

Les véhicules ferroviaires fonctionnent grâce à un moteur électrique alimenté par des installations implantées le long de voies ferrées. L'électricité est, par exemple, transmise par une caténaire à chaque véhicule ferroviaire au travers d'un pantographe ou par un troisième rail au travers d'un patin/frotteur de collection d'énergie électrique. La quantité d'énergie consommée par un véhicule ferroviaire varie en fonction de son état de circulation. Ainsi, un véhicule ferroviaire utilise une grande quantité d'énergie en un laps de temps réduit lors de phases d'accélération.

Certains véhicules ferroviaires freinent électriquement en utilisant des techniques de freinage par récupération. Dans ce cas, lors de phases de décélération, le moteur électrique fonctionne comme un générateur qui récupère l'énergie cinétique du véhicule et la convertit en électricité. Une partie de cette énergie cinétique est utilisée pour faire fonctionner les équipements auxiliaires du véhicule, comme les appareils de chauffage. L'énergie restante est renvoyée sur le réseau, et est notamment utilisable par un autre véhicule ferroviaire. Si aucun véhicule ferroviaire ne se trouve à proximité, la tension du réseau électrique augmente et l'énergie est alors dissipée au niveau d'une ou plusieurs résistances.

Pour éviter ces pertes d'énergie, il est connu de récupérer l'énergie électrique générée lors du freinage d'un véhicule ferroviaire et de la stocker à l'intérieur d'une station d'alimentation du réseau électrique.

On connait du document EP 2 255 992 A1 un système d'alimentation d'un réseau électrique comportant une ligne d'alimentation en courant, connectée à une installation pour véhicule ferroviaire. Ce système comporte un accumulateur nickel-hydrogène couplé directement à la ligne d'alimentation. Ce système est apte à accumuler l'énergie électrique générée lors du freinage et à la retransmettre plus tard sur le réseau électrique.

Un tel système ne donne cependant pas entière satisfaction.

Le document JP 2001 157385 A décrit également une installation de stockage de l'énergie électrique issue du freinage d'un véhicule ferroviaire.

Le document WO 2014/200335 A1 décrit également une installation de stockage de l'énergie électrique issue du freinage d'un véhicule ferroviaire, ladite énergie électrique étant réinjectée dans une station de recharge de bus électriques.

Un but de l'invention est de proposer une installation de stockage permettant de stocker plus efficacement de l'énergie électrique récupérée d'un véhicule ferroviaire.

A cet effet, l'invention a pour objet un système de stockage de l'énergie électrique issue du freinage d'un ou plusieurs véhicules ferroviaires, selon la revendication 1.

L'installation de stockage du système selon l'invention permet de récupérer l'énergie électrique de freinage d'un ou plusieurs véhicules ferroviaires circulant sur au moins une voie ferrée, de la stocker, puis de la réintroduire dans le réseau électrique à destination d'un ou plusieurs autres véhicules ferroviaires. L'énergie électrique générée lors du freinage peut ainsi être stockée pendant une longue durée pouvant notamment atteindre plusieurs heures, voire plusieurs jours.

Selon d'autres aspects avantageux de l'invention, le système de stockage est selon l'une des revendications 2 à 7.

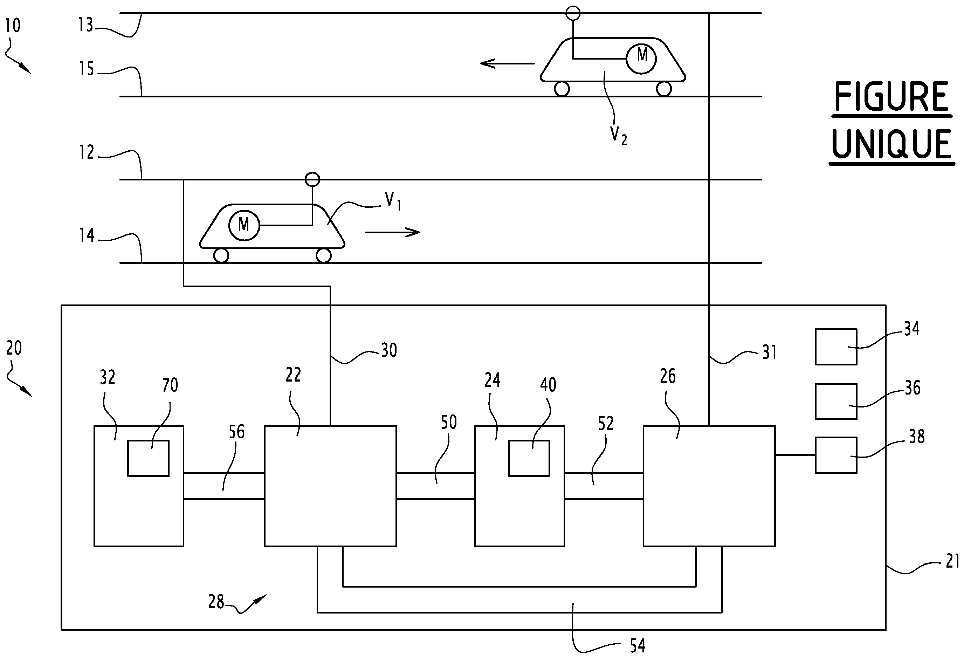

D'autres aspects et avantages de l'invention apparaîtront à la lecture de la description qui va suivre, donnée uniquement à titre d'exemple non limitatif, et faite en se référant au dessin annexé, sur lequel la figure unique est une vue schématique d'un système de stockage de l'énergie électrique issue du freinage d'un ou plusieurs véhicules ferroviaires selon l'invention.

Un système 10 de stockage de l'énergie électrique issue du freinage d'un ou plusieurs véhicules ferroviaires est représenté sur l'unique figure.

Le système 10 comporte au moins une ligne d'alimentation 12, 13 s'étendant respectivement le long d'une voie ferrée 14, 15 et au moins une installation 20 de stockage de l'énergie électrique issue du freinage d'un ou plusieurs véhicules ferroviaires circulant sur la ou les voies ferrées 14, 15.

Chaque ligne d'alimentation 12, 13 est associée à une voie ferrée 14, 15 respective et est apte à alimenter électriquement avec une tension électrique un ou plusieurs véhicules ferroviaires circulant sur ladite voie ferrée 14, 15. Par l'expression «ligne d'alimentation», il est entendu aussi bien un fil aérien de caténaire sur lequel vient frotter un pantographe d'un véhicule ferroviaire pour s'alimenter en énergie électrique, qu'un troisième rail disposé le long des rails de voies de chemin de fer. Dans le cas d'un troisième rail, le pantographe est plus connu sous le terme de « frotteur ».

Dans l'exemple de la figure unique, le système 10 comporte une première ligne d'alimentation 12 associée à une première voie ferrée 14 et une deuxième ligne d'alimentation 13 associée à une deuxième voie ferrée 15. La première ligne d'alimentation 12 est apte à alimenter un véhicule ferroviaire V1 circulant sur la première voie ferrée 14 et la deuxième ligne d'alimentation 13 est apte à alimenter un véhicule ferroviaire V2 circulant sur la deuxième voie ferrée 15.

Sur la figure, les voies ferrées 14, 15 sont à circulation inverse. On entend par « circulation inverse » que les véhicules ferroviaires V1, V2 circulent respectivement dans des sens opposés.

En variante, les véhicules ferroviaires V1, V2 circulent dans le même sens.

Chaque véhicule ferroviaire V1, V2 comporte un moteur électrique M.

Avantageusement, le système 10 comporte une pluralité d'installations 20 réparties le long des voies ferrées 14, 15. Typiquement, le système 10 comporte cinq installations, la distance entre deux installations consécutives étant supérieure à plusieurs centaines de mètres, de préférence supérieure à plusieurs kilomètres.

De préférence, chaque installation 20 est disposée à proximité d'une zone nécessitant le freinage et/ou l'accélération d'un véhicule ferroviaire, telle qu'une zone où les voies ferrées sont en pente et/ou une zone où les voies ferrées forment une succession de courbes.

Chaque installation 20 est destinée à être implantée à proximité d'au moins une voie ferrée 14, 15, tout en étant à l'écart de ladite voie 14, 15. Typiquement, chaque installation 20 est implantée à une distance minimale de chaque voie ferrée 14, 15, de préférence supérieure ou égale à 2 mètres, de préférence encore supérieure ou égale à 5 mètres. Chaque installation 20 est notamment destinée à être incluse à l'intérieur d'une infrastructure ferroviaire fixe, telle qu'une sous-station 21.

Chaque installation 20 est destinée à être implantée à l'extérieur du ou des véhicules ferroviaires V1, V2, typiquement à une distance supérieure à la distance minimale précitée.

Chaque installation 20 est raccordée électriquement à au moins une ligne d'alimentation 12, 13.

Lorsque le système 10 comporte plusieurs lignes d'alimentation 12, 13, chaque installation 20 est raccordée à chaque ligne d'alimentation 12, 13. En variante, lorsque le système 10 comporte plusieurs lignes d'alimentation 12, 13, chaque installation 20 est raccordée à une ligne respective d'alimentation 12, 13, ou encore à une paire respective de deux lignes d'alimentation 12, 13. Par exemple, lorsque le système 10 comporte N lignes d'alimentation 12, 13, N étant un entier naturel supérieur ou égal à 2, chaque installation 20 est raccordée à n lignes 12, 13, n étant un entier naturel compris entre 1 et N-1, les valeurs 1 et N-1 étant incluses.

Chaque installation 20 comprend, comme représenté sur la figure, une station d'électrolyse 22, un dispositif de stockage d'hydrogène 24 et une pile à combustible 26. Elle comporte en outre au moins un dispositif de circulation 28 et au moins une liaison électrique 30, 31.

Avantageusement l'installation 20 comporte également un dispositif de stockage d'oxygène 32. Selon un mode de réalisation préférentiel, l'installation 20 comprend un dispositif 34 de contrôle du remplissage des dispositifs de stockage 24, 32 et un dispositif de communication 36.

Avantageusement, l'installation 20 comporte en outre un convertisseur électrique 38, connecté à la pile à combustible 26, le convertisseur électrique 38 étant apte à modifier la tension du courant électrique délivré en sortie de la pile 26.

La station d'électrolyse 22 est représentée schématiquement sur la figure. Typiquement, comme connu en soi, la station d'électrolyse 22 comporte au moins un compartiment contenant de l'eau, une anode et une cathode, non représentés. En variante, la station d'électrolyse 22 comporte un compartiment anodique et un compartiment cathodique, séparés par une membrane. La station d'électrolyse 22 est apte, sous l'effet d'un courant électrique, à réaliser une électrolyse de l'eau et à produire du dioxygène O₂ et du dihydrogène H₂ à l'état gazeux. Par abus de langage, ces gaz sont, dans la présente description, communément appelés oxygène et hydrogène. Le fonctionnement de la station d'électrolyse 22 sera décrit plus en détail par la suite.

Le dispositif de stockage d'hydrogène 24 est apte à stocker le dihydrogène produit par la station d'électrolyse 22. Le dispositif de stockage d'hydrogène 24 comporte un réservoir, non représenté. Avantageusement, le dispositif de stockage d'hydrogène 24 comporte un compresseur 40 apte à liquéfier au moins une partie du dihydrogène stocké dans ledit dispositif de stockage 24.

La pile à combustible 26 est apte à générer un courant électrique à partir de l'hydrogène stocké dans le dispositif de stockage d'hydrogène 24. De préférence, la pile à combustible 26 est une pile à combustible à membrane d'échange de protons, aussi appelée PEMFC (acronyme anglais de « *Proton Exchange Membrane Fuel Cell* ») ou pile à combustible à membrane électrolyte polymère.

Comme connu en soi, la pile à combustible 26 comporte généralement un empilement en série de plusieurs cellules, non représentées, chaque cellule comprenant un assemblage membrane-électrodes. Cet assemblage est composé d'une membrane électrolytique et de deux électrodes disposées de chaque côté de la membrane et formant respectivement une anode et une cathode. La membrane sépare ainsi les compartiments de la cellule. La membrane électrolytique est une membrane polymère mince, permettant le passage des protons H⁺ mais imperméable aux réactifs et aux électrons e⁻. Chaque cellule comporte également deux plaques bipolaires pour distribuer respectivement l'hydrogène et l'oxygène, et un catalyseur, typiquement le platine. Le fonctionnement de la pile à combustible 26 sera détaillé par la suite.

Le dispositif de circulation 28 comporte une pluralité de conduites 50, 52, 54, 56 reliant les différents éléments de l'installation 20 entre eux. Une première conduite 50 est configurée pour le transport du dihydrogène généré par la station d'électrolyse 22, entre ladite station 22 et le dispositif de stockage d'hydrogène 24. Une deuxième conduite 52 est configurée pour le transport du dihydrogène entre le dispositif de stockage d'hydrogène 24 et la pile combustible 26. Une troisième conduite 54 est configurée pour le transport de l'eau générée par la pile à combustible 26 entre ladite pile 26 et la station d'électrolyse 22.

Sur la figure, une première liaison électrique 30 relie électriquement la première ligne d'alimentation 12 à la station d'électrolyse 22 et une deuxième liaison électrique 31 reliant électriquement la deuxième ligne d'alimentation 13 à la pile à combustible 26.

Lorsque l'installation 20 comporte un dispositif de stockage d'oxygène 32, le dispositif de stockage d'oxygène 32 est apte à stocker le dioxygène généré par la station d'électrolyse 22. Une quatrième conduite 56 est alors configurée pour le transport de l'oxygène généré par la station d'électrolyse 22 entre ladite station 22 et le dispositif de stockage d'oxygène 32. Le dispositif de stockage d'oxygène 32 comporte un réservoir, et éventuellement un compresseur 70. Le dioxygène produit dans la station d'électrolyse 22 est apte à être stocké, en vue de sa revente par exemple.

Le dispositif de contrôle 34 est apte à contrôler le niveau de remplissage du dispositif de stockage de l'hydrogène 24, ainsi que du dispositif de stockage de l'oxygène 32 lorsqu'il est présent. Le dispositif de contrôle 34 comporte par exemple un capteur pour chaque dispositif contrôlé, le capteur étant apte à mesurer le niveau de remplissage du dispositif de stockage 24, 32 respectif. Le dispositif de contrôle 34 est apte à comparer les niveaux de remplissage avec des valeurs prédéfinies. Si au moins un niveau de remplissage est supérieur à la valeur prédéfinie, le dispositif de contrôle 34 est apte à émettre un signal d'alarme, voire à interrompre le fonctionnement de la station d'électrolyse 22, comme cela sera décrit ultérieurement.

Le dispositif de communication 36 est apte à communiquer avec les véhicules ferroviaires V1, V2 circulant sur les voies ferrées 14, 15 et à recevoir un signal lorsqu'au moins un véhicule ferroviaire V1, V2 est à proximité de l'installation 20, notamment lorsqu'il entre en contact avec une section électrique des lignes d'alimentation 12, 13 reliée électriquement à l'installation 20, typiquement lorsque le véhicule est à une distance inférieure ou égale à quelques kilomètres.

Le fonctionnement du système de stockage 10 selon l'invention va être à présent décrit.

Un véhicule ferroviaire V1 circule sur la voie ferrée 14 alimentée électriquement par la ligne d'alimentation 12. Lorsqu'il décélère à proximité d'une installation 20, un signal est transmis par le véhicule ferroviaire V1 au dispositif de communication 36 de ladite installation 20. L'installation 20 récupère, via la caténaire et la première ligne d'alimentation 12, au moins une partie de l'énergie électrique issue du freinage du véhicule ferroviaire V1. Ladite énergie est transmise à la ligne d'alimentation 12, puis à la première liaison électrique 30.

Le courant électrique alimente alors la station d'électrolyse 22 et entraine la décomposition d'au moins une partie de l'eau contenue dans la station d'électrolyse 22 en dihydrogène gazeux et en dioxygène gazeux. Plus précisément, le courant électrique reçu du véhicule ferroviaire V1 permet de dissocier les molécules d'eau H₂O notamment en ions hydroxyde HO⁻ et hydrogène H⁺. Les ions hydrogène H⁺ acceptent des électrons à la cathode dans une réaction d'oxydoréduction en formant du dihydrogène gazeux H₂, selon la réaction de réduction suivante :

2 H⁺ + 2e⁻ → H₂ (1)

Simultanément, l'oxydation de l'eau se produit à l'anode, selon la réaction d'oxydation suivante :

2 H₂O → O₂ + 4H⁺ + 4e⁻ (2)

L'équation résultante de décomposition par électrolyse est la suivante :

2 H₂O → 2 H₂ + O₂ (3)

Le dioxygène généré par la station d'électrolyse 22 est alors récupéré à l'anode et circule dans la conduite 56 jusqu'au dispositif de stockage d'oxygène 32 dans lequel il est stocké, par exemple en vue de sa revente ou d'une future utilisation. En variante, lorsque l'installation 20 est dépourvue de dispositif de stockage d'oxygène 32, le dioxygène généré par la station d'électrolyse 22 est directement rejeté à l'extérieur de l'installation 20.

Le dihydrogène généré par la station d'électrolyse 22 est récupéré à la cathode et circule ensuite dans la conduite 50 jusqu'au dispositif de stockage d'hydrogène 24. Dans ledit dispositif de stockage 24, le dihydrogène est comprimé par le compresseur 40 et au moins une partie du dihydrogène est liquéfiée.

Le dihydrogène est apte à être stocké sans limitation de durée.

Un véhicule ferroviaire V2 circule sur la voie ferrée 15 alimentée électriquement par la ligne d'alimentation 13. Lorsqu'il accélère à proximité de l'installation 20, un signal est transmis par le véhicule ferroviaire V2 au système de communication 36 de ladite installation 20. Le dihydrogène stocké dans le dispositif de stockage d'hydrogène 24 de l'installation 20 est alors injecté dans la pile à combustible 26 au niveau de l'anode, où il se dissocie en ions hydrogène H⁺ et en électrons selon l'équation d'oxydation suivante :

2 H₂ → 4 H⁺ + 4e⁻ (4)

Les ions hydrogène traversent alors la membrane, mais les électrons, bloqués, sont contraints d'emprunter un circuit extérieur, ce qui génère un courant électrique. La tension de ce courant est préférentiellement modifiée par le convertisseur électrique 38. L'installation 20 alimente alors électriquement la deuxième ligne d'alimentation 13 et évite une chute de tension due à l'accélération du véhicule ferroviaire V2.

À la cathode, les ions hydrogène, les électrons et du dioxygène provenant de l'air ambiant forment de l'eau selon la réaction suivante :

O₂ + 4H⁺ + 4e⁻ → 2H₂O (5)

La réaction ci-dessus est exothermique. L'eau ainsi chauffée circule ensuite dans la troisième conduite 54 et est réinjectée dans la station d'électrolyse 22. L'eau réinjectée présente ainsi une température favorable à l'électrolyse de l'eau. Selon un mode de réalisation particulier, l'eau destinée à être utilisée dans la station d'électrolyse 22 est préalablement utilisée pour refroidir le convertisseur électrique 38.

Lorsque l'installation électrique 20 comporte un dispositif de contrôle 34, ce dernier contrôle les niveaux de remplissage des dispositifs de stockage 24, 32. Lorsqu'au moins un niveau de remplissage est supérieur à une valeur prédéfinie, l'énergie de freinage du véhicule ferroviaire V1 n'est pas transmise à l'installation et est dissipée, par exemple au niveau d'une résistance.

L'installation 20 selon l'invention stocke ainsi l'énergie électrique issue du freinage d'un ou plusieurs véhicules ferroviaires V1, V2 circulant sur au moins une voie ferrée en vue d'une utilisation ultérieure sur le réseau électrique ferroviaire. L'énergie électrique est ainsi susceptible d'être stockée pendant plusieurs heures, voire plusieurs jours. L'installation 20 évite ainsi que l'énergie de freinage ne soit dissipée et limite ainsi la perte d'énergie électrique sur le réseau ferroviaire.

En variante, la deuxième liaison électrique 31 est reliée à un réseau électrique autre, comme le réseau électrique d'un ou de plusieurs bâtiments, et l'énergie électrique générée par la pile à combustible 26 alimente alors électriquement ce réseau.

## Revendications

1. Système (10) de stockage de l'énergie électrique issue du freinage d'un ou plusieurs véhicules ferroviaires (V1, V2), le système comportant :
- une première ligne d'alimentation (12) s'étendant le long d'une première voie ferrée (14) pour alimenter au moins un véhicule ferroviaire (V1) circulant sur la première voie ferrée (14),
- une deuxième ligne d'alimentation (13) s'étendant le long d'une deuxième voie ferrée (15) pour alimenter au moins un véhicule ferroviaire (V2) circulant sur la deuxième voie ferrée (15) ; et
- au moins une installation (20) de stockage de l'énergie électrique issue du freinage d'un ou plusieurs véhicules ferroviaires (V1, V2) circulant sur au moins la première ou la deuxième voie ferrée (14, 15), l'installation (20) étant destinée à être implantée à l'extérieur du ou des véhicules ferroviaires (V1, V2),
l'installation (20) comprenant :
* une station d'électrolyse (22) de l'eau apte à utiliser l'énergie électrique générée lors du freinage du ou de chaque véhicule ferroviaire (V1, V2) ;
* un dispositif de stockage de l'hydrogène (24) formé par l'électrolyse de l'eau ; et
* une pile à combustible (26) apte à générer un courant électrique à partir de l'hydrogène stocké dans le dispositif de stockage d'hydrogène (24),
le système (10) étant **caractérisé en ce que** l'installation (20) comprend en outre un dispositif de communication (36) apte à communiquer avec au moins un véhicule ferroviaire (V1, V2), le dispositif de communication (36) étant apte à recevoir un signal transmis par l'au moins un véhicule ferroviaire (V1, V2) lorsqu'au moins la première ou la deuxième ligne d'alimentation (12, 13) alimentant l'au moins un véhicule ferroviaire (V1, V2) présente un besoin en énergie électrique ou un surplus en énergie électrique,
l'installation (20) étant raccordée électriquement à au moins la première ou la deuxième ligne d'alimentation (12, 13),
l'installation (20) étant apte à récupérer, via la première ligne d'alimentation (12), l'énergie électrique issue du freinage d'un ou plusieurs véhicules ferroviaires (V1) circulant sur la première voie ferrée (14) et à alimenter électriquement la deuxième ligne d'alimentation (13) à partir de l'énergie électrique récupérée via la première ligne d'alimentation (12).

2. Système (10) selon la revendication 1, dans lequel l'installation (20) comprend en outre un dispositif de circulation (28) apte à transporter de l'eau produite par la pile à combustible (26) jusqu'à la station d'électrolyse (22).

3. Système (10) selon l'une quelconque des revendications 1 ou 2, dans lequel le dispositif de stockage de l'hydrogène (24) comprend un compresseur (40) apte à liquéfier au moins une partie de l'hydrogène stocké.

4. Système (10) selon l'une quelconque des revendications 1 à 3, dans lequel l'installation (20) comprend en outre un dispositif de stockage de l'oxygène (32) formé par l'électrolyse de l'eau.

5. Système (10) selon l'une quelconque des revendications 1 à 4, dans lequel l'installation (20) comprend un dispositif de contrôle (34) apte à mesurer le niveau de remplissage de chaque dispositif de stockage (24, 32).

## Patentansprüche

1. System (10) zur Speicherung elektrischer Energie, die von der Bremsung eines oder mehrerer Schienenfahrzeuge (V1, V2) stammt, wobei das System aufweist:
- eine erste Stromversorgungsleitung (12), die sich entlang eines ersten Schienenwegs (14) erstreckt, zum Stromversorgen wenigstens eines Schienenfahrzeugs (V1), das auf dem ersten Schienenweg (14) fährt,
- eine zweite Stromversorgungsleitung (13), die sich entlang eines zweiten Schienenwegs (15) erstreckt, zum Stromversorgen wenigstens eines Schienenfahrzeugs (V2), das auf dem zweiten Schienenweg (15) fährt, und
- wenigstens eine Einrichtung (20) zur Speicherung von elektrischer Energie, die von der Bremsung eines oder mehrerer Schienenfahrzeuge (V1, V2), die auf wenigstens dem ersten oder dem zweiten Schienenweg (14, 15) fahren, wobei die Einrichtung (20) dazu bestimmt ist, am Äußeren des oder der Schienenfahrzeuge (V1, V2) eingebracht zu sein (V1, V2),
wobei die Einrichtung (20) aufweist:
* eine Station zur Elektrolyse (22) von Wasser, die imstande ist, die während der Bremsung des oder jedes Schienenfahrzeugs (V1, V2) erzeugte elektrische Energie zu verwenden,
* eine Vorrichtung zur Speicherung von Wasserstoff (24), der durch die Elektrolyse des Wassers gebildet wird, und
* eine Brennstoffzelle (26), die imstande ist, einen elektrischen Strom zu erzeugen ausgehend von dem Wasserstoff, der in der Vorrichtung zur Speicherung von Wasserstoff (24) gespeichert ist,
wobei das System (10) **dadurch gekennzeichnet ist, dass** die Einrichtung (20) ferner aufweist eine Kommunikationsvorrichtung (36), die imstande ist, mit wenigstens einem Schienenfahrzeug (V1, V2) zu kommunizieren, wobei die Kommunikationsvorrichtung (36) imstande ist, ein Signal zu empfangen, das von dem wenigstens einen Schienenfahrzeug (V1, V2) gesendet wird, wenn wenigstens die erste oder die zweite Stromversorgungsleitung (12, 14), die das wenigstens eine Schienenfahrzeug (V1, V2) stromversorgt, einen Bedarf an elektrischer Energie oder einen Überschuss an elektrischer Energie hat,
wobei die Einrichtung (20) mit wenigstens der ersten oder der zweiten Stromversorgungsleitung (12, 13) elektrisch verbunden ist,
wobei die Einrichtung (20) imstande ist, über die erste Stromversorgungsleitung (12), die elektrische Energie, die von der Bremsung eines oder mehrerer Schienenfahrzeuge (V1) stammt, die auf dem ersten Schienenweg (14) fahren, wiederzugewinnen und die zweite Stromversorgungsleitung (13) elektrisch zu versorgen ausgehend von der über die erste Stromversorgungsleitung (12) wiedergewonnenen elektrischen Energie.

2. System (10) gemäß Anspruch 1, wobei die Einrichtung (20) ferner eine Zirkulationsvorrichtung (28) aufweist, die imstande ist, das Wasser, das von der Brennstoffzelle (26), produziert wird, bis zur Station zur Elektrolyse (22) zu transportieren.

3. System (10) gemäß irgendeinem der Ansprüche 1 oder 2, wobei die Vorrichtung zur Speicherung von Wasserstoff (24) einen Verdichter (40) aufweist, der imstande ist, wenigstens einen Teil des gespeicherten Wasserstoffs zu verflüssigen.

4. System (10) gemäß irgendeinem der Ansprüche 1 bis 3, wobei die Einrichtung (20) ferner eine Vorrichtung zur Speicherung von Sauerstoff (32) aufweist, der durch die Elektrolyse von Wasser gebildet wird.

5. System (10) gemäß irgendeinem der Ansprüche 1 bis 4, wobei die Einrichtung (20) eine Steuervorrichtung (34) aufweist, die imstande ist, das Füllniveau jeder Vorrichtung zur Speicherung (24, 32) zu messen.

## Claims

1. System (10) for storing the electrical energy resulting from the braking of one or more railway vehicles (V1, V2), the system comprising:
- a first supply line (12) extending along a first railway track (14) for supplying at least one railway vehicle (V1) travelling on the first railway track (14),
- a second supply line (13) extending along a second railway track (15) for supplying at least one railway vehicle (V2) travelling on the second railway track (15); and
- at least one installation (20) for storing the electrical energy resulting from the braking of one or more railway vehicles (V1, V2) travelling on at least the first or the second railway track (14, 15), the installation (20) being intended to be installed outside the railway vehicle or vehicles (V1, V2),
the installation (20) comprising:
* a water electrolysis station (22) capable of using the electrical energy generated on braking of the or of each railway vehicle (V1, V2);
* a hydrogen storage device (24) for storing the hydrogen formed by the electrolysis of the water; and
* a fuel cell (26) capable of generating electric current from the hydrogen stored in the hydrogen storage device (24),
the system (10) being **characterised in that** the installation (20) further comprises a communication device (36) capable of communicating with at least one railway vehicle (V1, V2), the communication device (36) being capable of receiving a signal transmitted by the at least one railway vehicle (V1, V2) when at least the first or the second supply line (12, 13) supplying the at least one railway vehicle (V1, V2) has a need for electrical energy or a surplus of electrical energy,
the installation (20) being electrically connected to at least the first or the second supply line (12, 13),
the installation (20) being capable of recovering, *via* the first supply line (12), the electrical energy resulting from the braking of one or more railway vehicles (V1) travelling on the first railway track (14) and of electrically supplying the second supply line (13) from the electrical energy recovered *via* the first supply line (12).

2. System (10) according to claim 1, wherein the installation (20) further comprises a circulation device (28) capable of transporting water produced by the fuel cell (26) to the electrolysis station (22).

3. System (10) according to either claim 1 or claim 2, wherein the hydrogen storage device (24) comprises a compressor (40) capable of liquefying at least a portion of the stored hydrogen.

4. System (10) according to any one of claims 1 to 3, wherein the installation (20) further comprises an oxygen storage device (32) for storing the oxygen formed by the electrolysis of the water.

5. System (10) according to any one of claims 1 to 4, wherein the installation (20) comprises a monitoring device (34) capable of measuring the fill level of each storage device (24, 32).
